# EUROPEAN PATENT APPLICATION

(11) **EP 1 528 768 A2**
(43) Date of publication of application: **04.05.2005**
(21) Application number: 04011835.8
(22) Date of filing: 18.05.2004
(51) Int. Cl.: H04M 1/725, G06K 19/07

(54) **Mobile communication terminal with RFID function and RFID programming method in the same**

(30) Priority: 28.10.2003 KR 2003075652
(71) Applicant: Samsung Electronics Co., Ltd., Suwon-si, Gyeonggi-do (KR)
(72) Inventor: Jei, Dae-Gunn Samsung Electronics Co., Ltd, Suwon-si Gyeonggi-do (KR)
(74) Representative: Grünecker, Kinkeldey, Stockmair & Schwanhäusser Anwaltssozietät

(57) **Abstract**

A mobile communication terminal including a radio frequency identification (RFID) receiver for receiving RFID data in a first format. An operation device converts the RFID data in the first format into a second format. A memory stores the RFID data in the second format. A codec encodes RFID data stored in the memory. A modulator RFID-modulates data output from the codec. An RFID transmitter transmits data output from the modulator to an RFID reader.

## Description

The present invention relates generally to a mobile communication terminal, and in particular, to a mobile communication terminal with a radio frequency identification (RFID) function and an RFID programming method in the same.

The U.S. National Laboratory for Department of Agriculture developed an RFID transponder, or an RFID tag, for identifying livestock. An RFID flag, in which an electric code capable of identifying an animal is recorded, is inserted or attached to the animal. An interrogator (or a reader) for reading the electric code is installed in a cattle shed to monitor whether an animal has returned. The reader transmits a radio frequency (RF) signal to the RFID tag, and in response, an electric code recorded in the RFID tag is delivered to the reader after being modulated by a modulator in the RFID tag. This procedure is called "backscatter modulation." The RFID tag has an antenna coil to transmit the modulated signal to the reader therethrough. An early such system is well disclosed in U.S. Patent Nos. 4,075,632 and 4,360,810.

Over time, technology for identifying a moving object has been applied to various fields, including cattle management. For example, such technology has been applied to a vehicle, a container vessel, a railcar, etc., and information recorded in an RFID tag of such transportation means is used in tracking a position of the transportation means and identifying the contents of freight. Such applications and related arts are well disclosed in U.S. Patent Nos. 4,739,328, 4,782,345, 4,786,907, 4,816,839, 4,835,377, and 4,853,705.

Currently, RFID technology is being tested in various other fields. Among these other fields, a communication system is attracting a large amount of public attention due to its various possible applications. For example, because a mobile communication system holds a great number of subscribers, its operator can easily make profits by commercializing an RFID-based application service. Currently, mobile communication systems have been saturated in terms of an earning rate, so service providers eagerly desire the development of any new application services capable of creating additional profits.

If RFID technology is introduced into a mobile communication system, it is expected that various additional services appropriate for a cellular environment can be provided. To this end, it is most urgently necessary to combine current RFID devices with a current cellular system.

Related prior art is disclosed in Korean Patent Application No. 2003-69669, entitled "Mobile Terminal Circuit including an RFID Tag and Wireless Identification Method Using the Same," filed on October, 7, 2003, by the applicant of the present invention. According to the prior art method, an RFID tag is required to program new or updated ID data in a certain application service. In addition, due to the high reuse possibility of a mobile communication terminal, there is a demand for a method for updating ID data stored in a reused mobile communication terminal.

A conventional RFID tag programming scheme is classified into a contact programming scheme and a contactless programming scheme. In the contact programming scheme, a user of an RFID tag delivers necessary RFID tag data, usually in the form of a document file, to a provider manufacturing the RFID tag, and the provider then programs the RFID data during manufacturing of the RFID tag. For example, such a programming scheme is applied to MCRF 200 or MCRF 250 by Microchip™.

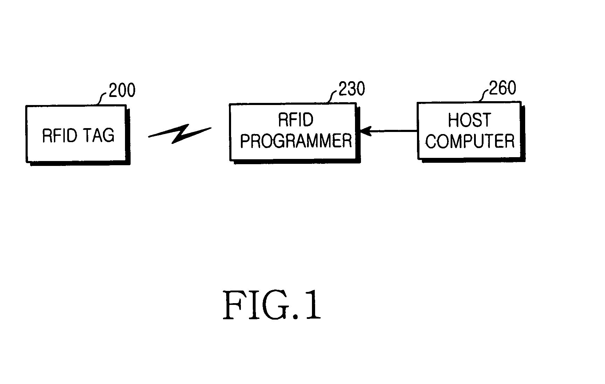

FIG. 1 is a block diagram illustrating a configuration of a system for programming an RFID tag on a contactless basis. As illustrated in FIG. 1, an RFID programmer 230 transmits a programming protocol to an RFID tag (or RFID transponder) 200 in a predetermined waveform, and the RFID tag 200 updates RFID data stored therein in response to the programming protocol.

For example, a contactless programming system can be implemented with PG103001, a contactless programming tool (or programmer) for an RFID tag, which is one of MCRF 2XX series by Microchip™, and RFLAB™, which is user interface software. RFLAB™ is installed in a host computer 260 and is a program for controlling the RFID programmer 230 and following a user's commands.

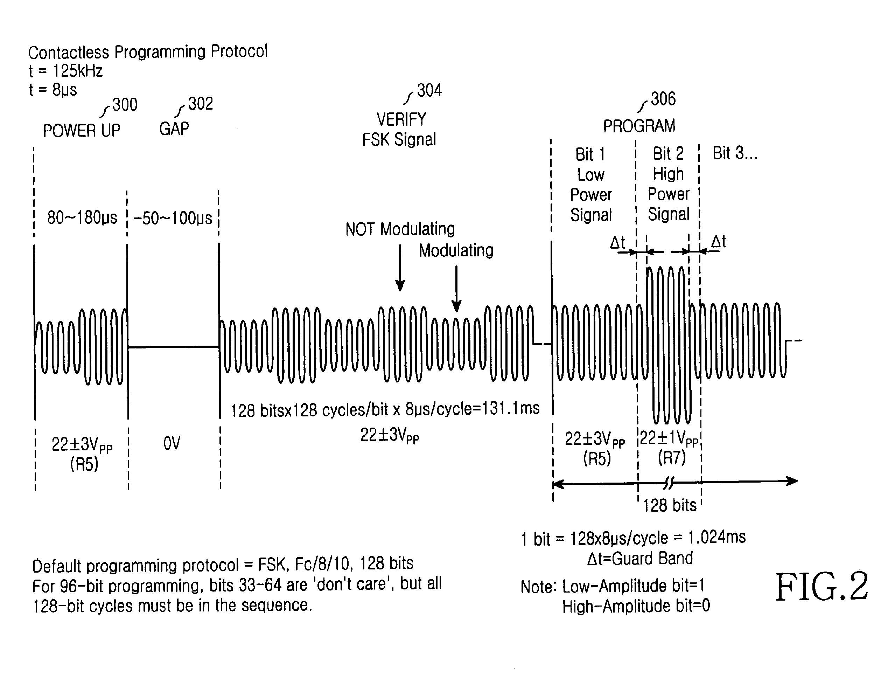

FIG. 2 is a diagram illustrating a signal waveform of a programming protocol in the contactless RFID tag programming system illustrated in FIG. 1. FIG. 2 illustrates a signal waveform of a protocol for programming a programmable RFID tag, e.g., MCRF 200 by Microchip™. More specifically, the illustrated programming protocol has a carrier frequency of 125KHz and a unit time of 8µs. Reference numeral 300 represents a power-up signal transmitted from the RFID programmer 230 to the RFID tag 200. The power-up signal 300 provides electric power from the RFID programmer 230 to the RFID tag 200. Reference numeral 302 represents a gap period. The RFID tag 200 applies internal electric power to its components in response to the power-up signal 300, and a time period for which such an operation is performed correspond to the gap 302. Reference numeral 304 represents a verification signal. The RFID tag 200, in response to the power-up signal 300, FSK (Frequency Shift Keying)-modulates the verification signal 304 and transmits the FSK-modulated verification signal 304 to the RFID programmer 230. The FSK-modulated verification signal 304 indicates that the RFID tag 200 is in a programmable state. Reference numeral 306 represents a programming signal.

Upon receiving the verification signal 304, the RFID programmer 230 transmits the programming signal 306 to the RFID tag 200 according to a predetermined protocol rule. The programming signal 306 illustrated in FIG. 2 is formed of a digital signal, which represents a low amplitude bit with '1' and a high amplitude bit with '0'.

Such a conventional RFID tag programming scheme has several disadvantages. In the contact programming scheme, RFID data recorded during manufacturing of an RFID tag cannot be changed after the product comes into the market. Additionally, in the contactless programming scheme, propriety devices such as the RFIC programmer 230 and the host computer 260 must be provided, and an RF signal must be transmitted in the signal waveform of FIG. 2. Therefore, when signal degradation occurs due to a change in an RF environment, the contactless programming scheme is difficult to support stable programming. To guarantee the contactless programming protocol of FIG. 2, an initial power-up signal must maintain a voltage of about 22V If the initial power-up signal fails to hold this voltage, the programming is not initiated.

U.S. patent No. 5,712,628 issued to Phillips et al. discloses a digitally programmable radio module. Although U.S. patent No. 5,712,628 discloses a system applicable to various radio frequencies and signal formats, a circuit structure of an RFID tag disadvantageously becomes complicated, in order to make it possible to program the RFID tag under various conditions. In addition, the patent contains no mention of unification between a mobile communication terminal and an RFID tag.

EP 1029421 discloses a system in which an ID card connected to a mobile communication terminal has at least one non-mobile ID. However, the plurality of circuits are not integrated into one circuit, and the patent does not mention how to program ID data.

It is, therefore, the object of the present invention to provide a method for easily programming RFID tag data so that a user can efficiently use various services.

This object is solved by the subject matters of the independent claims.

Preferred embodiments are defined in the dependent claims.

It is an aspect of the present invention to provide a method for stabilizing a programming environment using a circuit of a stabilized mobile communication terminal instead of introducing a propriety programmer for updating RFID tag data.

It is another aspect of the present invention to provide a mobile communication terminal combined with an RFID tag, for easily programming the RFID tag.

In accordance with one aspect of the present invention, there is provided a mobile communication terminal comprising: a radio frequency identification (RFID) receiver for receiving RFID data in a first format; an operation device for converting the RFID data in the first format into a second format; a memory for storing the RFID data in the second format; a codec for encoding RFID data stored in the memory; a modulator for RFID-modulating data output from the codec; and an RFID transmitter for transmitting data output from the modulator to an RFID reader.

In accordance with another aspect of the present invention, there is provided a method for performing radio frequency identification (RFID) in a mobile communication terminal with an RFID function, comprising the steps of: receiving an RFID signal; extracting only RFID data from the received RFID signal; converting a format of the RFID data into a serial protocol format; and storing the converted RFID data in a memory.

The above features and advantages of the present invention will become more apparent from the following detailed description when taken in conjunction with the accompanying drawings in which:
FIG. 1 is a block diagram illustrating a configuration of a system for programming an RFID tag on a contactless basis;
FIG. 2 is a diagram illustrating a signal waveform of a programming protocol in the contactless RFID tag programming system illustrated in FIG. 1;
FIG. 3A is a block diagram illustrating a structure of an RFID tag programming system according to an embodiment of the present invention;
FIG. 3B is a block diagram illustrating a structure of a mobile communication terminal with the RFID function illustrated in FIG. 3A;
FIG. 4 is a diagram illustrating an RFID signal format defined in an RFID standard;
FIG. 5 is a diagram illustrating an RFID signal with a format that is converted using a programming protocol in a mobile communication terminal according to an embodiment of the present invention; and
FIG. 6 is a flowchart illustrating a method for implementing RFID programming in a mobile communication terminal with an RFID function according to an embodiment of the present invention.

Preferred embodiments of the present invention will now be described in detail with reference to the annexed drawings. In the drawings, the same or similar elements are denoted by the same reference numerals even though they are depicted in different drawings. In the following description, a detailed description of known functions and configurations incorporated herein has been omitted for conciseness.

In the following description, the term "RFID programming" indicates an operation of newly storing or updating RFID data provided from the exterior (base station, server, host computer, user, etc.) in a memory so that a mobile communication terminal can perform an RFID function.

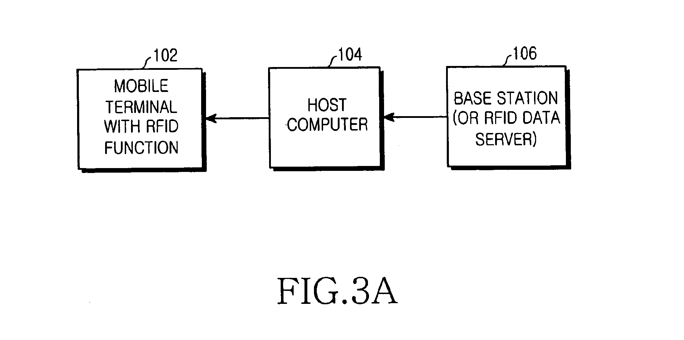

FIG. 3A is a block diagram illustrating a structure of an RFID tag programming system according to an embodiment of the present invention. Referring to FIG. 3A, a mobile communication terminal 102 receives RFID-related information to be newly stored or updated, from a host computer 104, and stores the received information in its memory (not shown) to thereby support an RFID function. The host computer 104 is provided with the RFID-related information from a base station 106 or an RFID data server.

Unlike the illustrated example, a mobile communication terminal may read data by directly accessing a base station or an authority managing RFID data on a wired or wireless basis without a host computer intervening therebetween. In addition, a user may directly input and program RFID data using an input means such as a keypad through proper authentication or even without authentication.

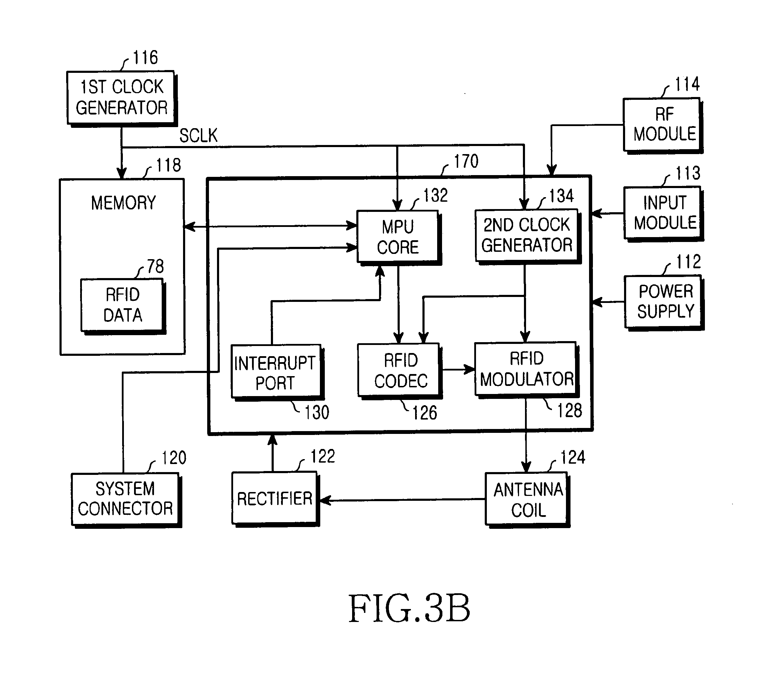

FIG. 3B is a block diagram illustrating a structure of a mobile communication terminal with the RFID function illustrated in FIG. 3A. Referring to FIG. 3B, a main processing unit (MPU) 170 of the mobile communication terminal includes the various components of an RFID tag, i.e., an RFID codec 126 and an RFID modulator 128. A memory 118 stores RFID data 78, and can be implemented with an electrically erasable and programmable read-only memory (EEPROM). Commonly, the EEPROM stores user defined values such as initially set values for an RF module, a display and a voice volume, a password and directory data, or wireless application protocol (WAP) data. However, as the latest flash ROM increases in its capacity, data stored in the low-speed EEPROM tends to be stored in the high-speed flash ROM. Therefore, it is common that the EEPROM has an enough space for storing surplus data. Therefore, it is profitable to store RFID data in the idle space.

A first clock generator 116 generates a system clock SCLK, and provides the generated system clock SCLK to an MPU core 132 and the memory 118. A second clock generator 134 divides the system clock SCLK, or a source clock, into several clocks, and provides appropriate clocks to their respective peripheral components.

The RFID modulator 128 can be easily implemented within the MPU 170. Modulation schemes used in RFID technology include frequency shift keying (FSK) and phase shift keying (PSK). Theses are lower in complexity than a modulation scheme for a conventional cellular mobile communication system, e.g., Gaussian minimum shift keying (GMSK), which is a modulation scheme used in a GSM (Global System for Mobile communication) mobile communication system, so they can be easily implemented through conventional related logic and technology. Also, the RFID codec 126 is lower in complexity and simpler in implementation than coding for the conventional cellular mobile communication.

An interrupt port 130 detects approach of an RFID reader (not shown), and notifies the approach to the MPU core 132, which is a main processing unit of the MPU 170. Upon detecting approach of the RFID reader through the interrupt port 130, the MPU core 132 issues a command to deliver RFID data stored in the memory 118 to the RFID codec 126 directly or through a memory management unit (MMU, not shown). The RFID codec 126 receiving the RFID data encodes the received RFID data and delivers the encoded RFID data to the RFID modulator 128. The RFID modulator 128 modulates the encoded RFID data and delivers the modulated RFID data to the RFID reader via an antenna coil 124.

A system connector 120 controls interfacing with a host computer 104 to which the mobile communication system is connected, and battery recharging. The system connector 120 delivers serial digital data transmitted from the host ) computer 104, to the MPU core 132, and the serial digital data is stored in the memory 118.

The RFID programmer 230 and the host computer 260 illustrated in FIG. 1 have, for example, 9600 baud rate, 8 data bits, and 1 stop bit, and perform communication through a no-parity RS-232 serial interface. Likewise, the system connector 120 of FIG. 3B also supports the RS-232 serial interface, and makes serial digital data communication between the host computer 104 and the mobile communication terminal 102 illustrated in FIG. 3B possible.

An RF module 114 is provided for transmitting and receiving radio signals. In this embodiment of the present invention, the mobile communication terminal 102 can receive RFID data from a base station 106 via the RF module 114.

An input module 113 acts as a user interface means, and for example, a general keypad or an on-screen keypad can be used as the input module 113. In this embodiment of the present invention, a user can personally input RFID data using the keypad.

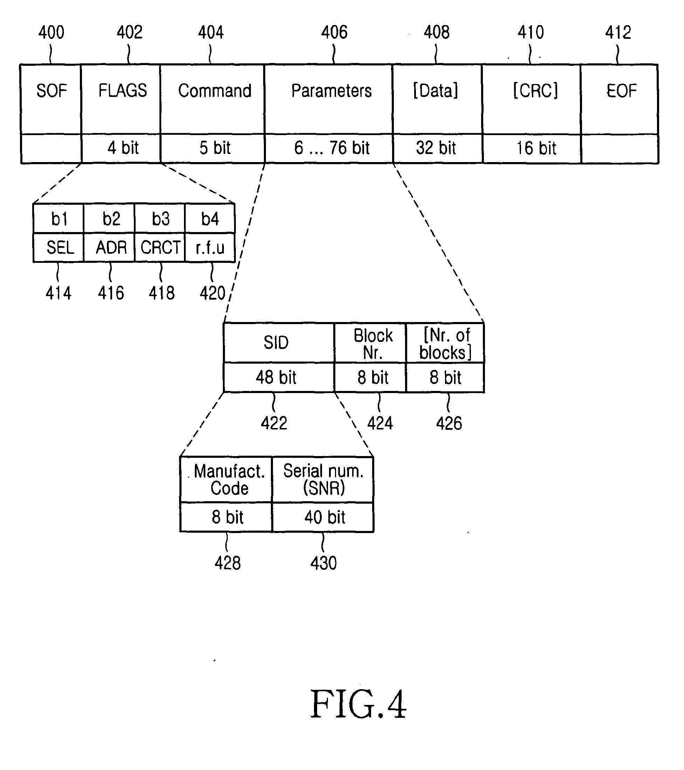

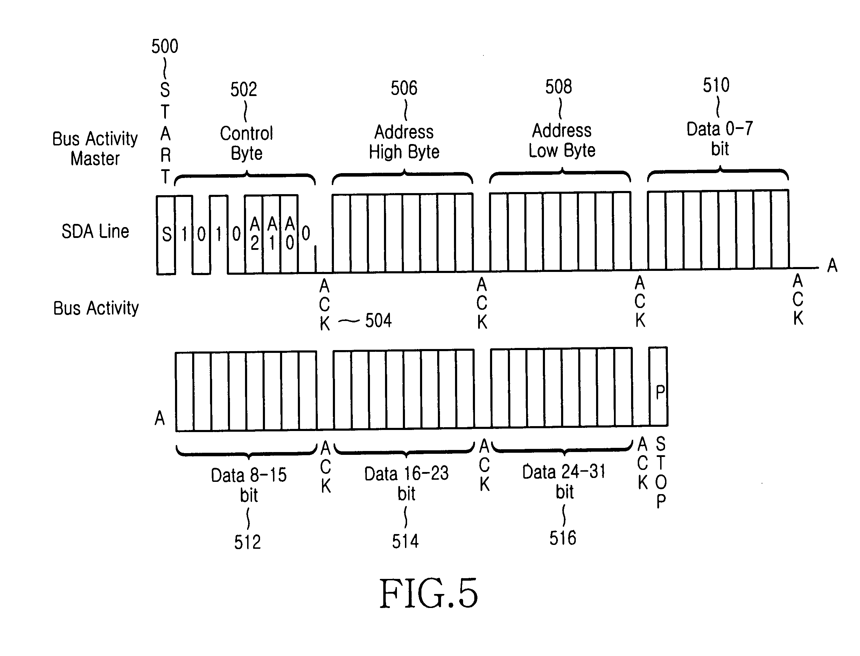

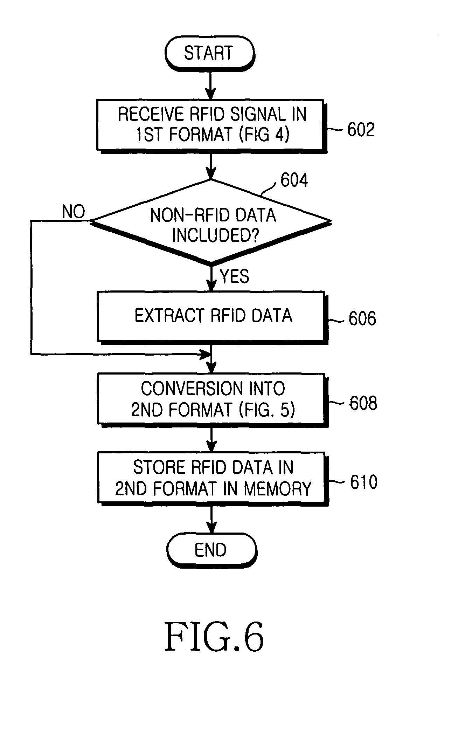

FIG. 4 is a diagram illustrating an RFID signal format defined in an RFID standard. For example, FIG. 4 illustrates an RFID signal format defined in ISO 14223. There are several types of RFID data delivered from a host computer to a mobile communication terminal for RFID programming. The RFID technology supports various standards for application services: ISO 11784/11785/14223 for animal identification; ISO 14223 for an advanced transponder; ISO 10536 for a closed coupling smart card; ISO 14443 for a proximity coupling smart card; and ISO 15693 for a vicinity coupling smart card.

Referring to FIG. 4, SOF 400 and EOF 412 are bits indicating a start and an end of a signal, respectively. Command 404, comprised of 5 bits, can generate 32 types of commands. Command codes #00 ∼ #19 are already defined in the standard, and command codes #20 ∼ #31 can be freely changed by a chip maker. Parameters 406 is comprised of 6 - 76 bits, in which a Block Number 424 and Number-of-Blocks 426 indicate an address of the memory 118 where data is to be stored. In Parameters 406, SID (Serial IDentification) 422 represents an address of a particular RFID reader and can be implemented so that it is activated when an ADR (Address) bit 416 of FLAGS 402 is set to, for example, '1'. 4 bits 414, 416, 418, and 420 of FLAGS 402 represent options, and out of these bits, CRCT (CRC detecTion) 418 indicates use of 16-bit CRC (Cyclic Redundancy Check) 410 and SEL 414 indicates selection of a reader in a special selection state.

RFID data and additional information, such as Command 404, FLAGS 402 and CRC 410 for transmitting the RFID data, are added to the illustrated RFID signal.

However, in the embodiment of the present invention, the MPU core 132 can extract only the RFID data, i.e., 32-bit Data 408 illustrated in FIG. 4, and store it in the memory 118, because as components of the RFID tag are integrated into the mobile communication terminal, conventionally required information, e.g., CRC 410 and FLAGS 402, that was necessary for stable transmission of Data 408 becomes unnecessary.

The MPU core 132 of the mobile communication terminal extracts only RFID data from a RFID signal delivered in a first format (e.g., FIG. 4), converts the extracted RFID data into a second format (e.g., FIG. 5), and provides the converted RFID data to the memory 118.

FIG. 5 is a diagram illustrating an RFID signal with a format that has been converted using a programming protocol in a mobile communication terminal according to an embodiment of the present invention. In this embodiment, RFID data is divided into a plurality of blocks using an I²C programming protocol, i.e., a typical programming protocol, and then delivered from the MPU core 132 to the memory 118.

Four bits following a start bit 500 constitute a control code, and the control code depends upon a unique model of the memory 118. Three bits following the control code are chip select bits, and designate a slave where programming is to be performed, e.g., the memory 118 in the embodiment of the present invention, among the devices supporting the I²C programming protocol, which can be connected to the MPU core 132. In FIG. 5, the control code and the chips select bits are included in control byte 502. The one bit following the chip select bits is a read/write bit, and is set to '0' in a programming operation. An ACK bit 504 is used to indicate that data reception from the memory 118 is 'good'.

In this protocol, a single bidirectional serial data (SDA) line is used. Address High Byte 506 and Address Low Byte 508 are data fields used by the MPU core 132 to informing the memory 118 of an address where the RFID data is to be written, based on a memory map of the MPU core 132.

In FIG. 4, 32 bits are transmitted at once without discrimination. However, in FIG. 5, the RFID information is divided into four 8-bit blocks 510, 512, 514, and 516, before being transmitted.

FIG. 6 is a flowchart illustrating a method for implementing RFID programming in a mobile communication terminal with an RFID function according to an embodiment of the present invention. Referring to FIG. 6, in step 602, the MPU core 132 receives an RFID signal in a first format. Here, the first format represents, for example, the format illustrated in FIG. 4. In step 604, the MPU core 132 determines whether non-RFID data is included in the RFID signal. If additional information is included in the RFID signal, the MPU core 132 extracts only RFID data from the RFID signal in step 606. In step 608, the MPU core 132 converts the extracted or received RFID data into a second format. Here, the second format refers to, for example, the format illustrated in FIG. 5. In step 610, the MPU core 132 stores the RFID data in the second format in a predetermined area of the memory 118, completing the RFID programming.

As described above, in performing RFID programming, the new mobile communication system combined with an RFID tag does not require a separate propriety programming device. This contributes to cost reduction as well as user convenience. In addition, use of the stabilized mobile communication terminal contributes to stabilization of a programming environment. Moreover, because a readable/writable memory in the mobile communication terminal is used as an area for storing RFID data, it is possible to program the RFID data even after the product comes into the market.

While the present invention has been shown and described with reference to certain preferred embodiments thereof, it will be understood by those skilled in the art that various changes in form and details may be made therein without departing from the scope of the present invention as defined by the appended claims.

## Claims

1. A mobile communication terminal comprising:
a radio frequency identification receiver for receiving a radio frequency identification signal;
an operation device for converting radio frequency identification data to a predetermined format;
a memory for storing the format-converted radio frequency identification data; and
a radio frequency identification transmitter for transmitting the radio frequency identification data to a radio frequency identification reader.

2. The mobile communication terminal of claim 1, wherein the operation device is adapted for extracting radio frequency identification data from the received radio frequency identification signal.

3. The mobile communication terminal of claim 1 or 2, wherein the predetermined format is a serial protocol format for dividing the radio frequency identification data into a plurality of sub-areas before transmission.

4. The mobile communication terminal of claim 1, wherein the received radio frequency identification signal comprises radio frequency identification data in a first format.

5. The mobile communication terminal of claim 4, wherein said operation device is adapted for converting said radio frequency identification data in the first format to said predetermined format.

6. The mobile communication terminal of claim 5, wherein said predetermined format is a second format.

7. The mobile communication terminal of claim 6, comprising a codec for encoding radio frequency identification data stored in the memory.

8. The mobile communication terminal of claim 7, further comprising a modulator for radio frequency identification-modulating the encoded data output from the codec.

9. The mobile communication terminal of claim 8, wherein the transmitter is adapted for transmitting the modulated data output from the modulator to the radio frequency identification reader.

10. The mobile communication terminal of claim 9, wherein the first format is defined to compile the radio frequency identification data in one data area at once before transmission, and the second format is a serial protocol for dividing the radio frequency identification data into a predetermined number of sub-areas before transmission.

11. The mobile communication terminal of claim 9 or 10, wherein the memory comprises an electrically erasable and programmable read-only memory.

12. The mobile communication terminal of one of claims 9 to 11, wherein the radio frequency identification data is received from a host computer, and the radio frequency identification receiver includes a system connector for communicating with the host computer.

13. The mobile communication terminal of one of claims 9 to 11, wherein the radio frequency identification receiver receives the radio frequency identification data from a base station.

14. The mobile communication terminal of one of claims 9 to 13, wherein the radio frequency identification receiver receives the radio frequency identification data input by a user.

15. A method for performing radio frequency identification in a mobile communication terminal including a radio frequency identification function, comprising the steps of:
receiving a radio frequency identification signal;
extracting radio frequency identification data from the received radio frequency identification signal;
converting a format of the radio frequency identification data into a serial protocol format; and
storing the converted radio frequency identification data in a memory.
